# EUROPEAN PATENT SPECIFICATION

(11) **EP 3 621 128 B1**
(45) Date of publication and mention of the grant of the patent: **07.10.2026**
(21) Application number: 17909601.1
(22) Date of filing: 13.12.2017
(51) Int. Cl.: H01M 50/569, H01M 10/48, H01M 50/249, H01M 50/211, H01M 50/209, H01M 50/119, B60L 50/64, H01M 10/04, H01M 50/103

(54) **BATTERY PACK, BATTERY ENERGY STORAGE SYSTEM AND ELECTRIC CAR**
BATTERIEPACK, BATTERIEENERGIESPEICHERSYSTEM UND ELEKTROFAHRZEUG
BLOC-BATTERIE, SYSTÈME DE STOCKAGE D'ÉNERGIE À BATTERIE ET VOITURE ÉLECTRIQUE

(30) Priority: 09.05.2017 CN 201710320508
(43) Date of publication of application: 11.03.2020
(73) Proprietor: Yinwang Intelligent Technologies Co., Ltd., Shenzhen, Guangdong 518110 (CN)
(72) Inventor: YANG, Tonghuan, Shenzhen Guangdong 518129 (CN); HE, Huan, Shenzhen Guangdong 518129 (CN); ZHOU, Kui, Shenzhen Guangdong 518129 (CN)
(74) Representative: Maiwald GmbH
(86) International application number: PCT/CN2017/115812
(87) International publication number: WO 2018/205598

(56) References cited:
- WO-A1-2014/100937
- CN-U- 204 255 553
- CN-U- 204 255 553
- CN-U- 205 051 384
- CN-U- 206 098 498
- JP-A- 2009 238 606
- KR-A- 20160 064 871
- US-A- 5 618 641
- US-A1- 2013 093 383
- US-A1- 2015 037 662

## Description

### TECHNICAL FIELD

This application relates to the energy field, and in particular, to a battery pack, a battery energy storage system, and an electric car.

### BACKGROUND

A battery pack is a major component in a battery energy storage system in the energy field. If a collision occurs, a foreign matter intrudes into a battery compartment, or a lithium-ion battery spontaneously generates a fire or an explosion due to various reasons, serious safety problems may occur. In terms of these problems, a pressure sensor is usually used to monitor pressure born by a battery in the foregoing various situations. An existing battery pack with a pressure monitoring function is mainly implemented by installing a pressure sensor between a battery group outer package and a battery module. A pouch cell battery is used for a battery cell in the battery module, and the battery group outer package includes a plurality of binding straps. A battery pack of this structure has a short use period and low safety performance. The CN 204 255 553 U refers to a battery expansion force test device.

### SUMMARY

This application provides a battery pack, a battery energy storage system, and an electric car, which have simple structures and can improve safety performance. The invention is set out in the appended set of claims.

According to a first aspect, a battery pack is provided. The battery pack includes a battery module and a pressure sensing apparatus. The battery module includes a plurality of hard battery cells and two end plates. The plurality of hard battery cells are arranged in stacked layers, and the two end plates are separately disposed along a thickness direction of the hard battery cells for tightly pressing the plurality of hard battery cells and the pressure sensing apparatus that is disposed between the two end plates. The pressure sensing apparatus includes a first pressing plate and at least one pressure sensor disposed on the first pressing plate. The first pressing plate is disposed on a first hard battery cell of the plurality of hard battery cells and fully covers a front of the first hard battery cell, that is, the first pressing plate is located between the first hard battery cell and the at least one pressure sensor. The first pressing plate is configured to transfer an expansion force in the thickness direction of the hard battery cells to the at least one pressure sensor, and the at least one pressure sensor is configured to monitor the expansion force.

Compared with a pouch cell battery, a hard battery cell mainly generates a deformation in a thickness direction of a battery cell when the battery expands. Specifically, a housing of the battery cell may be made of a hard material. For example, the housing may be a steel housing or an aluminum housing.

The battery cell may be a common prismatic battery, that is, a surface of the battery cell is prismatic.

A battery with a hard housing has a longer use period and higher safety performance, and the expansion force in the thickness direction of the hard battery cells can be transferred to the pressure sensor by using a pressing plate, to eliminate an effect of an irregular expansion of the battery cell.

Optionally, a plurality of pressure sensors may alternatively be directly placed between an end plate and a battery cell or between two battery cells. In other words, a pressure sensor is directly in contact with the battery cell or the end plate without a pressing plate.

The battery cells may be connected in series or in parallel. According to the present invention, in addition to a mechanical force provided by a module housing between the battery cells, mechanical strength of a module is improved by using auxiliary means by using a structural adhesive between the battery cells.

In a possible implementation, the first hard battery cell is a first battery cell on a first end plate of the two end plates, and the at least one pressure sensor is disposed between the first end plate and the first pressing plate.

Optionally, the pressure sensing apparatus may be separately disposed between two end plates and a battery cell, that is, one pressure sensing apparatus is placed on each side.

In a possible implementation, the pressure sensing apparatus further includes a second pressing plate. When the pressure sensing apparatus is arranged between the first end plate and the first battery cell, the second pressing plate is located between the first end plate and the at least one pressure sensor. When the pressure sensing apparatus is arranged between the first hard battery cell and a second hard battery cell in the plurality of battery cells, the second pressing plate is located between the second battery cell and the at least one pressure sensor. The first pressing plate is disposed between the first hard battery cell and the at least one pressure sensor.

Optionally, one pressure sensing apparatus may be disposed between an end plate and a battery cell, and the other pressure sensing apparatus is disposed between two battery cells.

In a possible implementation, the battery pack further includes a guide member, configured to guide a pressing plate to move along a thickness direction of the battery cell.

In a possible implementation, the guide member includes a plurality of sliding shafts, the plurality of sliding shafts are fixed between the first end plate and a second end plate, and the plurality of sliding shafts run through the pressing plate.

The sliding shafts may be fixed in a bolt hole manner, or a welding manner.

In a possible implementation, the guide member includes four sliding shafts, and the four sliding shafts are parallel and are evenly distributed in four corners of the pressing plates.

Optionally, the guide member may alternatively be a chute or a guide rail. To be specific, there may be a beam on side plates, and there is a downward beam on each side of an upper part of the pressing plate, and the two beams cooperate with each other, so that the pressing plate can exactly move along the thickness direction of the battery cell.

In a possible implementation, the battery module further includes a battery measurement unit BMU, configured to transmit a value of the expansion force monitored by the pressure sensing apparatus to an external battery management system BMS.

Optionally, the battery module may not include the BMU. The value monitored by the pressure sensing apparatus in the plurality of battery modules may be directly transmitted to the external BMS, and the BMS manages a state of each module.

In a possible implementation, the plurality of battery cells have a same shape. The battery pack further includes a battery pack housing, where the battery pack housing includes a bottom plate, two side plates, and a top cover plate, the battery module is fixed to the bottom plate, the two side plates are configured to arrange the battery module neatly, and the top cover plate is configured to package a top part of the battery module.

In a possible implementation, the battery module further includes a line isolation board, where the line isolation board is disposed between the top part of the battery module and the top cover plate, and is configured to isolate connection lines of the battery module from the battery module.

Use of the line isolation board can reduce a line short circuit caused by line wear or other damage.

In a possible implementation, the battery pack includes a plurality of battery modules of a same specification, and the plurality of battery modules of the same specification are fixedly placed on the bottom plate in a same manner.

In a possible implementation, the two end plates, the two side plates, and the bottom plate are connected in a riveting or welding manner.

In a possible implementation, a housing of the battery cell is a steel housing or an aluminum housing.

In a possible implementation, each of the at least one pressure sensor includes a resistance strain sensor, or each pressure sensor includes a resistance strain sensor, an electronic amplifier, an analog-to-digital converter, and a microprocessor.

In a possible implementation, the battery pack is applied to an electric car, base station energy storage, data center backup power storage, an uninterruptible power system UPS, or an energy storage power station.

According to a second aspect, a battery energy storage system is provided. The battery energy storage system includes any battery pack in the first aspect and a battery management system BMS. A pressure sensing apparatus in each of the at least one battery pack is configured to monitor an expansion force in a thickness direction of a battery cell in a battery pack. The BMS is configured to determine a state of a corresponding battery pack based on a change of the expansion force monitored by the pressure sensing apparatus in each of the battery packs.

In a possible implementation, the battery energy storage system is applied to an electric car, and the pressure sensing apparatus in a first battery pack in the at least one battery pack faces toward a driving direction of the electric car.

According to a third aspect, an electric car is provided, including any battery energy storage system in the second aspect.

More aspects and embodiments will be presented in the following detailed description.

### BRIEF DESCRIPTION OF DRAWINGS

FIG. 1 is a battery pack with a pressure monitoring function in the prior art;
FIG. 2 is a schematic structural diagram of a battery pack according to an embodiment of this application;
FIG. 3 is another schematic structural diagram of a battery pack according to an embodiment of this application;
FIG. 4 is a top view and a main view of a pressure sensing apparatus according to an embodiment of this application;
FIG. 5 is a schematic block diagram of a battery energy storage system according to an embodiment of this application; and
FIG. 6 is still another schematic structural diagram of a battery pack according to an embodiment of this application.

### DESCRIPTION OF EMBODIMENTS

The following describes technical solutions of this application with reference to accompanying drawings.

In recent years, with improvement of people's living standards and enhancement of environmental protection consciousness, people realize that energy is an issue deserving much attention. For the sake of energy and environment, electric cars have developed rapidly with the help of governments and carmakers. Pure electric cars have become an important development direction for electric cars because they can truly realize "zero emission". With its excellent performance, a lithium-ion battery has become an ideal power source for a new generation of electric cars. Due to its light weight, large power storage, large power, no pollution, no secondary contamination, a long service life, a small self-discharge coefficient, and a wide range of temperature adaptability, the lithium-ion battery is an ideal vehicle storage battery for electric bicycles, electric motorcycles, electric cars, electric trucks, or the like.

Currently, most new energy vehicles use lithium-ion batteries as energy storage apparatuses, and lithium-ion batteries as energy storage apparatuses still have many technical problems. For example, during use of a lithium-ion battery, a volume of the battery is expanded in different degrees due to various reasons, such as a change in phase, a particle accumulation mode, secondary reaction product accumulation, and gas production. In particular, in electric cars, lithium-ion batteries are arranged and used in groups, and accumulated expansions of volumes of battery cells cause stress on a fixing apparatus in a module. When the accumulated stress is excessively large, the fixing apparatus in the module is damaged, causing a failure and safety risk. For example, a spontaneous generation of a fire and an explosion of the lithium-ion batteries cause serious safety problems. For these problems, common monitoring methods and existing problems are as follows: (1) A temperature sensor monitors temperature, and temperature transmission is slow. Therefore, there is no sufficient time for the driver to escape. (2) A voltage sensor cannot distinguish a risk level. Abnormal battery voltage may be small problems such as poor signal transmission or a poor cable connection, or may be serious failures such as a battery explosion, which cannot be distinguished.

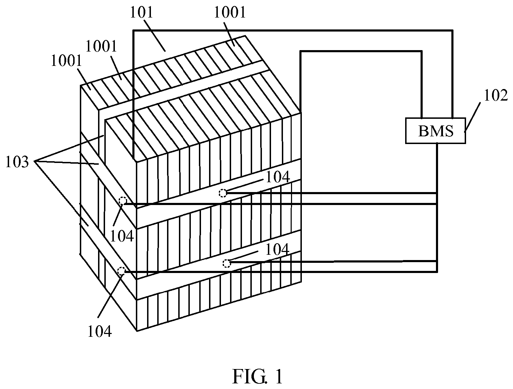

Batteries are important as core components of electric cars. However, maximum pressure that a battery can bear is limited. When pressure exceeds a value, battery charge and discharge performance are affected. When the pressure is too high, a battery housing break and battery thermal runaway may even be caused. Therefore, there is another battery pack at present, in which a pressure sensor is installed between a battery group outer package and an electrochemical cell. However, such a battery pack is applicable to a pouch cell battery and can only monitor battery swelling. Specifically, as shown in FIG. 1, the battery pack includes a battery group outer package 103, a battery core body 101 including a plurality of single batteries 1001 which are connected in series or in parallel, and at least one pressure sensor 104. The single battery 1001 is a pouch cell battery typically featuring that an aluminum plastic film is used as a package. The battery core body 101 is bound or packaged by the battery group outer package body 103 for fixing. the battery group outer package body 103 may include a plurality of binding straps, or may be packaged by using a housing. The pressure sensor 104 is disposed between the battery core body 101 and the outer package body 103, and there is a force between the pressure sensor 104 and the battery core body and the outer package body 103. It is assumed that pressure of the pressure sensor 104 is F0 when a battery group is normal. A signal output end of the pressure sensor 104 is connected to a battery group management system (Battery management system, BMS) 102.

Working principles are as follows: when any battery in the battery group swells, pressure is generated, and the pressure is transmitted through adjacent electrochemical cells. Due to the deformation feature of the pouch cell battery, a battery core body generates external pressure in each direction. The pressure sensor is between 103 and 101, and may detect a pressure change. A pressure upper limit F1 is set on the pressure sensor. When detecting that pressure is greater than F1, the pressure sensor 104 outputs a signal to the battery group to determine that the battery group swells.

Such a battery pack mainly resolves an expansion of a battery with a pouch cell housing. Because the pouch cell housing is soft and after the battery swells and is squeezed, a swelling force is transferred to all directions. Regardless of a position of the pressure sensor, when the battery swells, pressure sensors at different positions monitor a same value. Therefore, such a battery pack can only monitor a pressure rise caused by swelling of the battery in a battery group. In other words, only whether the battery in the battery pack swells or not can be monitored, and specific pressure born by a system where a mechanical part of the battery pack is located in a specific direction cannot be accurately monitored.

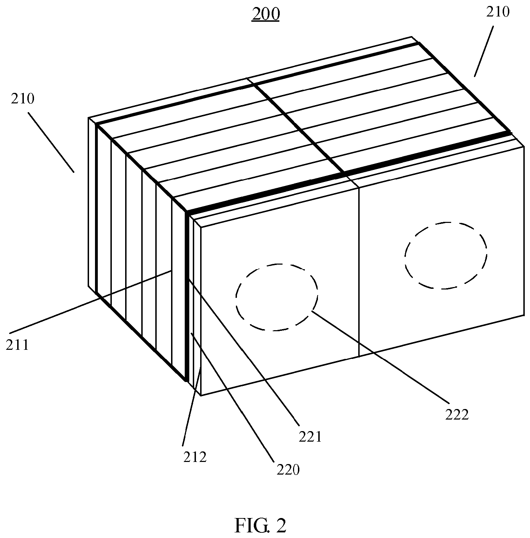

Embodiments of this application are put forward based on the problem found in pressure monitoring in the foregoing pouch cell battery, and pressure is monitored in a hard housing lithium-ion battery. As shown in FIG. 2, an embodiment of this application provides a battery pack 200. The battery pack 200 includes a battery module 210 and a pressure sensing apparatus 220. The battery module 210 includes a plurality of hard battery cells and two end plates. The plurality of hard battery cells are arranged in stacked layers, and the two end plates are respectively disposed on two faces of a thickness direction of the hard battery cells for tightly pressing the plurality of hard battery cells and the pressure sensing apparatus 220 that is disposed between the two end plates. The pressure sensing apparatus 220 includes a first pressing plate 221 and at least one pressure sensor 222 disposed on the first pressing plate 221. The first pressing plate 221 is disposed on a first hard battery cell 211 of the plurality of hard battery cells and fully covers a surface of the first battery cell 211, that is, the first pressing plate 221 is located between the first hard battery cell 211 and the at least one pressure sensor 222. The first pressing plate 221 is configured to transfer an expansion force in the thickness direction of the hard battery cells to the at least one pressure sensor 222, and the at least one pressure sensor 222 is configured to monitor the expansion force.

It should be understood that the battery pack may be applied to a lithium-ion battery energy storage system such as an electric car, base station energy storage, data center backup energy storage, an uninterruptible power system (Uninterruptible Power System, UPS), or an energy storage power station. For ease of description, the following uses a battery pack applied to an electric car as an example for description. The embodiments of this application are not limited thereto.

Specifically, compared with a pouch cell battery, a hard battery has high advantages in a use period and safety performance, and a hard battery is dust-proof and waterproof, which is not easy to leak electricity. Therefore, in the embodiments of this application, the battery cell that is used is made of a hard material or a hard housing such as a steel housing or an aluminum housing is used for a battery cell. The battery module including a hard housing battery usually includes at least one battery cell. If the battery module includes a plurality of battery cells, the plurality of battery cells may be a plurality of identical battery cells. For example, specifications are the same, and housing materials are the same. Alternatively, the housing materials can be the same but the specifications are different. Alternatively, the specifications may be the same but the housing materials are different. For example, some have steel housings, and others have aluminum housings. Generally, lithium-ion batteries mainly include a cylindrical battery and a prismatic battery, and the embodiments of this application mainly focus on improvement of the prismatic battery, in other words, a surface of the battery cell is prismatic. However, the embodiments of this application are not limited thereto. For example, the surface of the battery cell may be a pie shape, provided that battery cells may be arranged in stacked layers. In addition to a mechanical force provided by a module housing between the prismatic battery cells, mechanical strength of a module is improved by using auxiliary means by using a structural adhesive between the battery cells. Two end plates are further disposed outside the plurality of battery cells, and a pre-tightening force needs to be applied on the two end plates to tightly press the plurality of battery cells. To measure an expansion force of battery cells in each battery module, a pressure sensor is added between the battery modules. For example, a pressure sensor may be placed between an end plate and the battery cell, and a pressure sensor may be placed on one side, or pressure sensors may be placed on both sides. In other words, pressure sensors are placed between the two end plates and the module, or a pressure sensor may be placed between modules, that is, a pressure sensor is placed between two specific battery cells in the battery module.

It should be understood that, when the battery pack is in a normal state, that is, when the battery in the battery module does not expand, the pressure sensor is clamped by the two end plates, and a value monitored by the pressure sensor may be preset to be a preset value F0. Alternatively, F0 may be considered as a value of a horizontal force that is applied to ensure that the pressure sensor is fixed between the battery modules without being affected by the gravity force.

It should be further understood that a quantity of pressure sensors placed on a same plane may not be limited. For example, it is assumed that pressure sensors are placed between an end plate and a battery cell, pressure sensors may be separately placed at four corners and a central position of the battery cell. When the battery cell in the battery module expands, a value monitored by the five pressure sensors may be integrated to determine an actual force born by the battery cell. Pressure of the battery pack can be well measured provided that the pressure sensors are evenly distributed on the surface of the battery cell.

Further, to reduce costs of the battery pack, a quantity of the pressure sensors may be reduced. One pressure sensor may be placed on one plane. To eliminate an effect of an irregular expansion of the battery cell, a pressing plate can be used to increase an area for transferring an expansion force. As shown in FIG. 2, the first hard battery cell (211) is a first battery cell on a first end plate (212) side of the two end plates, and the at least one pressure sensor (222) is disposed between the first end plate (212) and the first pressing plate (221).

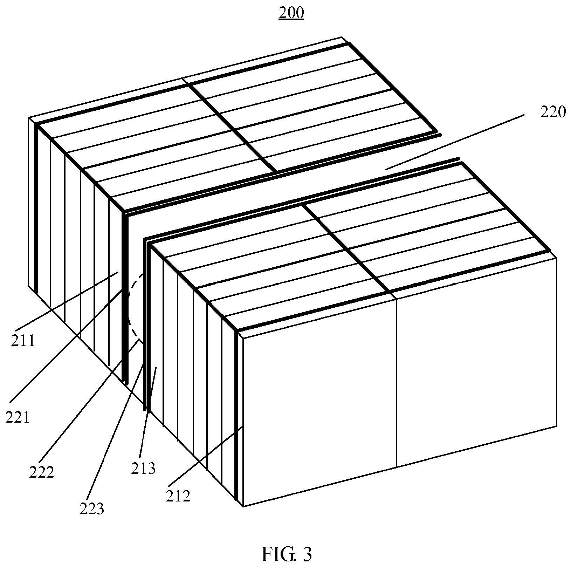

Specifically, the pressure sensing apparatus may be disposed between an end plate and a battery cell. Generally, a pressing plate is in contact with the battery cell, and the pressure sensor is placed between the pressing plate and the end plate. An area of the pressing plate may be greater than a force bearing area of the pressure sensor. Further, the area of the pressing plate may be greater than or equal to an area of a surface of the battery cell. In other words, a width and a height of the pressing plate are greater than or equal to a width and a height of a front of the battery cell. The pressing plate also needs to have sufficient rigidity. A specific bearing force and a deformation amplitude need to be designed based on a module weight and a pre-tightening force. As shown in FIG. 3, the pressure sensing apparatus may be disposed between two battery cells 211 and 213. Similarly, to eliminate an effect of an irregular expansion of a battery cell, pressing plates 221 and 223 may be used to increase an area for transferring an expansion force. That is, two pressing plates are separately fixed to the two battery cells, and a pressure sensor is placed between the two pressing plates.

Optionally, in this embodiment of this application, the plurality of battery cells have a same shape. The battery pack 200 further includes a battery pack housing 240, where the battery pack housing 240 includes a bottom plate 241, two side plates 242, and a top cover plate 243. The battery module 210 is fixed to the bottom plate 241, the two side plates 242 are configured to arrange the battery module 210 neatly, and the top cover plate 243 is configured to package a top part of the battery module 210.

A battery module has at least two battery cells. Battery cells may be connected in series or in parallel. Batteries in the battery module can be arranged in stacked layers, and side plates may be placed on both sides of the batteries to ensure that the batteries are arranged neatly. In addition, mechanical strength of a module in a stacking direction of the batteries is ensured. A bottom plate is placed at the bottom of the battery to support the battery cells, and a battery module fixing apparatus may also be installed at the bottom of the battery, so that at least one battery module is fixed to the bottom plate, a pre-tightening force is applied on end plates of the battery module to tightly press the batteries, and the pre-tightening force is maintained to connect to the side plates and the bottom plate. Connection manners may be a riveting manner, a welding manner, and the like. An uppermost part of the battery module is a top cover plate, which seals connection lines of a module.

The battery pack may be connected to some control units by using connection lines, and these connection lines may be worn or damaged after a period of time. As a result, a line short circuit occurs. Therefore, further, a line isolation board 216 may be placed between a top part of the battery module and the top cover plate, and is configured to isolate connection lines of a battery from a battery body.

Optionally, in this embodiment of this application, the battery pack 200 further includes a guide member 230, configured to guide a pressing plate to move along a thickness direction of the battery cell.

To guide the pressing plate to move along the thickness direction of the battery cell, a manner of a sliding shaft or a chute may be used. Specifically, a plurality of sliding shafts may be fixedly disposed between the first end plate and a second end plate, and the first pressing plate 221 and/or the second pressing plate 223 separately have round holes that match the plurality of sliding shafts. Moreover, cooperation between the round holes and the sliding shafts needs to ensure that the pressing plate can move only along the thickness direction of the battery cell. It should be understood that an area of the pressing plate needs to be greater than a front area of the battery cell. For example, it should be ensured that a height of the pressing plate is at least greater than a height of the battery cell. Two sliding shafts may be disposed above the pressing plate, or it may be ensured that a width of the pressing plate is greater than a width of the battery cell, and four sliding shafts may be disposed at four corners of the pressing plate. Further, the four sliding shafts may be parallel and are evenly distributed in four corners of the pressing plate. It should be further understood that a quantity of the sliding shafts should not be limited. In addition, a fixing manner of the sliding shafts between the first end plate and the second end plate is not limited, and may be a bolt hole manner, a welding manner, or the like. Alternatively, a chute or a guide rail may be disposed on the side plates of two sides. For example, there may be a beam on the side plates, and there is a downward beam on each side of an upper part of the pressing plate, and the two beams cooperate with each other, so that the pressing plate can exactly move along the thickness direction of the battery cell.

It should be understood that, the foregoing is described by using two simple and relatively easy implementations as examples. All structures that can guide the pressing plate to move along the thickness direction of the hard battery cells fall within the protection scope of this application.

Optionally, the pressure sensing apparatus 220 may be integrally designed with a battery module, or may be separately designed and may be installed in a battery module. For example, the pressure sensing apparatus 220 may include two pressing plates: a first pressing plate 221 and a second pressing plate 223; four sliding shafts 231, and at least one pressure sensor 222. When the pressure sensing apparatus 220 is arranged between the first end plate 212 and the first hard battery cell 211, the second pressing plate 223 is located between the first end plate 212 and the at least one pressure sensor 222. When the pressure sensing apparatus 220 is arranged between the first hard battery cell 211 and a second hard battery cell 213 in the plurality of hard battery cells, the second pressing plate is located between the second hard battery cell

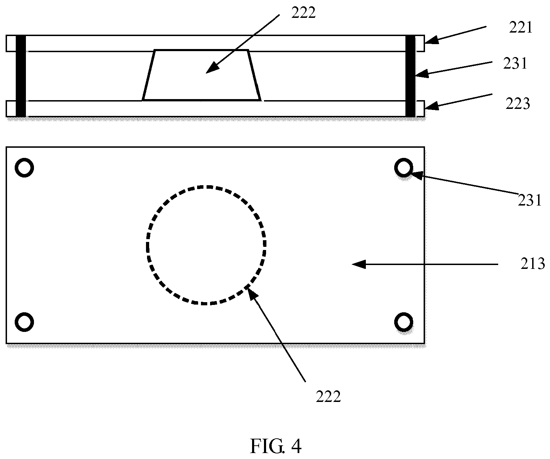

(213) and the at least one pressure sensor 222. The first pressing plate 221 is located between the first hard battery cell 211 and the at least one pressure sensor 222. For example, as shown in a top view in FIG. 4 and a main view shown in a lower part of FIG. 4. Optionally, sizes of the two pressing plates 221 and 223 may be the same, and the pressing plate is configured to: eliminate an effect of an irregular expansion of the battery cell, and transfer the expansion force to the pressure sensor. The sliding shafts 231 are configured to regulate a moving direction of the pressing plate, and the pressure sensor 222 converts a mechanical signal into an electrical signal. The pressure sensor needs to be a digital sensor, preferably a resistance strain weighing sensor, which includes a resistance strain sensor, or includes a resistance strain sensor, an electronic amplifier, an analog-to-digital converter, and a microprocessor. The resistance strain sensor may also be a capacitive or photoelectric sensor, or the like. A work process may be as follows: The pressing plate is squeezed by a battery and an end plate of the battery, and an accumulated expansion force in a thickness direction of the battery in a module is transferred to a pressure sensor, and is converted into an electrical signal. Then the electrical signal is amplified by an amplifier, and is converted by a processor into a digital signal of a pressure value, and finally the digital signal is transmitted to a controller.

Optionally, the battery pack 200 may include at least one of the foregoing battery modules and a corresponding pressure sensing apparatus. The plurality of battery modules 210 of the same specification are fixedly placed on the bottom plate 241 in a same manner. A pressure sensing apparatus may be placed in each battery module.

Optionally, the foregoing battery module 210 may further include a battery measurement unit (Battery measurement system, BMU) 215, configured to transmit a value of an expansion force monitored by the pressure sensing apparatus 220 in the battery module to an external battery management system.

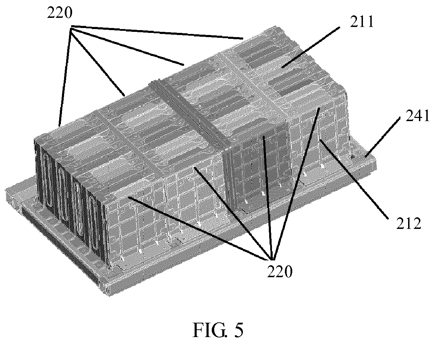

FIG. 5 is another schematic diagram of a battery pack according to an embodiment of this application. To show an internal structure of the battery pack, the battery pack housing is omitted, and only a bottom pallet of the battery pack is displayed. Four modules in the figure are placed in a same direction. Each battery module has 12 prismatic hard housing batteries, and the module includes two end plates. As shown in the figure, pressure sensing apparatuses need to be placed at positions of end plates of each module. Each module includes at least one pressure sensing apparatus which may be optionally installed on a front side end plate 212 or a rear side end plate, or may be installed on both sides.

An embodiment of this application further provides a battery energy storage system 300. The battery energy storage system 300 includes at least one of the foregoing battery packs 200 and a BMS 310. A pressure sensing apparatus 220 in each of the at least one battery pack 200 is configured to monitor an expansion force in a thickness direction of a battery cell in a battery pack. The BMS 310 is configured to determine a state of a corresponding battery pack based on a change of the expansion force monitored by the pressure sensing apparatus in each of the battery packs.

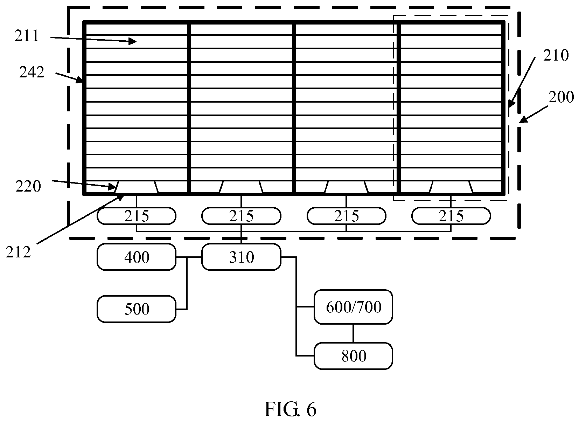

Specifically, a working block diagram of the battery energy storage system 300 is shown in FIG. 6. A battery pack includes four modules 210, a pressure sensing apparatus 220, a battery pack housing 240, and a BMU 215. In addition, a BMS 310 connected to the BMU of each module and a relay system 400 are also provided. Similarly, a thermal management system 500, a microcontroller unit (microcontroller unit, MCU) 600, a vehicle control unit (Vehicle Control Unit, VCU) 700, and an alarm 800 of a head unit that are coordinated with the BMS are also shown. A battery module includes 12 prismatic batteries and is placed in stacked layers and fixed in a same way. A pressure sensing apparatus is placed on one end plate. Each module is configured with a battery measurement unit BMU. Positive and negative electrodes of a battery and a pressure sensing apparatus are connected to the BMU. The BMU transfers a monitored signal to the BMS. The BMS performs calculation and determining, and transfers a control or warning signal to a relay system, a thermal management system, an MCU, a VCU, and a head unit.

Optionally, in this embodiment of this application, the battery energy storage system 300 may be applied to an electric car, and the pressure sensing apparatus 220 in a first battery pack 200 in the at least one battery pack faces toward a driving direction of the electric car.

In a specific embodiment, a battery pack in the battery energy storage system corresponds to the battery pack 200 in the foregoing embodiment, and a pressure sensing apparatus in the battery energy storage system corresponds to the pressure sensing apparatus 220 in the foregoing embodiment.

It should be understood that a structure of the battery pack included in the battery energy storage system is similar to the structure mentioned in the foregoing embodiment. For brevity, details are not described herein again.

It should be further understood that the battery energy storage system may be further applied to the foregoing base station energy storage, the data center backup energy storage, the uninterruptible power system UPS, or the energy storage power station. The embodiments of this application are not limited thereto.

Optionally, the battery energy storage system 300 is applied to an electric car, and the pressure sensing apparatus 220 in a first battery pack 200 in the at least one battery pack faces toward a driving direction of the electric car.

An embodiment of this application further provides an electric car 1000. The electric car may include any one of the foregoing battery energy storage systems.

It should be understood that a battery energy storage system in the electric car 1000 in this embodiment of this application corresponds to the battery energy storage system 300, and an internal structure of the battery energy storage system is similar to the structure of the battery pack 200. For brevity, details are not described herein again.

A similar structure and apparatus in this application may also be configured to monitor battery expansions and failures of the energy storage system. For batteries of digital products, in terms of pouch cell batteries, battery failures and explosions are often accompanied by battery expansions. Similar systems can be installed for batteries of devices such as mobile phones, tablets, and laptops, to prevent product damage caused by the battery expansions and reduce a probability of battery explosions and burnings.

For ease of understanding of this application, the embodiments of this application shown in the figure are merely illustrative. Some improvements are possible without departing from the scope of this application.

Although the preferred embodiments of this application have been described herein, it should be understood that the purpose of the used terms is to have the essence of descriptive but non-restrictive words. It is obvious to a person skilled in the art that many modifications and variations of this application can be obtained according to the foregoing teachings. Therefore, it should be understood that, within the scope of the claims, the accompanying drawings are used only for convenience, and are not intended to constitute any limitation in any manner. This application may be implemented in other manners except the foregoing specific descriptions.

## Claims

1. A battery pack (200), wherein the battery pack (200) comprises a battery module (210) and a pressure sensing apparatus (220);
the battery module (210) comprises a plurality of hard battery cells, wherein the hard battery cells have a steel housing or aluminum housing, and two end plates, the plurality of hard battery cells being arranged in stacked layers, and the two end plates being separately disposed along a thickness direction of the hard battery cells for tightly pressing the plurality of hard battery cells and the pressure sensing apparatus (220) that is disposed between the two end plates;
the pressure sensing apparatus (220) comprises a first pressing plate (221) and at least one pressure sensor (222) disposed on the first pressing plate (221), the first pressing plate (221) being disposed on a first hard battery cell (211) of the plurality of hard battery cells and fully covering a surface of the first hard battery cell (211), the first pressing plate (221) being configured to transfer an expansion force in the thickness direction of the hard battery cells to the at least one pressure sensor (222), and the at least one pressure sensor (222) being configured to monitor the expansion force,
wherein the plurality of hard battery cells have a same shape, and the battery pack (200) further comprises:
a battery pack housing (240), wherein the battery pack housing (240) comprises a bottom plate (241), two side plates (242), and a top cover plate (243), the battery module (210) is fixed to the bottom plate (241), the two side plates (242) are configured to arrange the battery module (210) neatly, and the top cover plate (243) is configured to package a top part of the battery module (210);
wherein between the hard battery cells a structural adhesive is used.

2. The battery pack (200) according to claim 1, wherein the first hard battery cell (211) is a first battery cell on a first end plate (212) side of the two end plates, and the at least one pressure sensor (222) is disposed between the first end plate (212) and the first pressing plate (221).

3. The battery pack (200) according to claim 1 or 2, wherein the pressure sensing apparatus (220) further comprises a second pressing plate (223); and the pressure sensing apparatus (220) is arranged between the first end plate (212) and the first hard battery cell (211), the second pressing plate (223) is located between the first end plate (212) and the at least one pressure sensor (222); or the pressure sensing apparatus (220) is arranged between the first hard battery cell (211) and a second hard battery cell (213) in the plurality of hard battery cells, the second pressing plate is located between the second hard battery cell (213) and the at least one pressure sensor (222), and the first pressing plate (221) is located between the first hard battery cell (211) and the at least one pressure sensor (222).

4. The battery pack (200) according to claim 3, wherein the second pressing plate (223) and the first pressing plate (221) are of equal size.

5. The battery pack (200) according to any one of claims 1 to 4, wherein the battery pack (200) further comprises:
a guide member (230), configured to guide at least one pressing plate (221, 223) to move along a thickness direction of the hard battery cells.

6. The battery pack (200) according to claim 5, wherein the guide member comprises a plurality of sliding shafts, and the plurality of sliding shafts are fixed between the first end plate (212) and a second end plate (214) of the two end plates, and the plurality of sliding shafts run through the pressing plate.

7. The battery pack (200) according to claim 6, wherein the guide member comprises four sliding shafts, and the four sliding shafts are parallel and evenly distributed in four corners of the pressing plate.

8. The battery pack (200) according to any one of claims 1 to 7, wherein the battery module (210) further comprises:
a battery measurement unit, BMU (215), configured to transmit a value of the expansion force monitored by the pressure sensing apparatus (220) to an external battery management system BMS.

9. The battery pack (200) according to claim 1, wherein the battery module (210) further comprises a line isolation board (216), and the line isolation board (216) is disposed between the top part of the battery module (210) and the top cover plate (243), and is configured to isolate connection lines of the battery module (210) from the battery module (210).

10. The battery pack (200) according to any one of claims 1 to 9, wherein the battery pack (200) comprises a plurality of the battery modules (210) of a same specification, and the plurality of the battery modules (210) of the same specification are fixedly placed on the bottom plate (241) in a same manner.

11. The battery pack (200) according to claim 1 or 9, wherein the two end plates, the two side plates (242), and the bottom plate (241) are connected in a riveting or welding manner.

12. The battery pack (200) according to any one of claims 1 to 11, wherein each of the at least one pressure sensor (222) comprises a resistance strain sensor, or each pressure sensor comprises a resistance strain sensor, an electronic amplifier, an analog-to-digital converter, and a microprocessor.

13. A battery energy storage system (300), wherein the battery energy storage system (300) comprises the at least one battery pack according to any one of claims 1 to 12 and a battery management system BMS (310); and
a pressure sensing apparatus (220) in each of the at least one battery pack (200) is configured to monitor an expansion force in a thickness direction of hard battery cells in a battery pack; and the BMS (310) is used to determine a state of a corresponding battery pack based on a change of the expansion force monitored by the pressure sensing apparatus in each of the battery packs.

14. The battery energy storage system (300) according to claim 13, wherein the battery energy storage system (300) is configured to be applied to an electric car, and the pressure sensing apparatus (220) in a first battery pack (200) in the at least one battery pack is configured to face toward a driving direction of the electric car.

## Patentansprüche

1. Batteriepack (200), wobei der Batteriepack (200) ein Batteriemodul (210) und eine Druckerfassungsvorrichtung (220) umfasst;
wobei das Batteriemodul (210) eine Vielzahl von prismatischen Batteriezellen umfasst, wobei die prismatischen Batteriezellen ein Stahlgehäuse oder ein Aluminiumgehäuse und zwei Endplatten aufweisen, wobei die Vielzahl von prismatischen Batteriezellen in gestapelten Schichten angeordnet sind und wobei die zwei Endplatten entlang einer Dickenrichtung der prismatischen Batteriezellen getrennt voneinander angeordnet sind, um die Vielzahl von prismatischen Batteriezellen und die Druckerfassungsvorrichtung (220), die zwischen den zwei Endplatten angeordnet ist, fest aneinanderzudrücken;
wobei die Druckerfassungsvorrichtung (220) eine erste Anpressplatte (221) und mindestens einen Drucksensor (222) umfasst, der auf der ersten Anpressplatte (221) angeordnet ist, wobei die erste Anpressplatte (221) an einer ersten prismatischen Batteriezelle (211) aus der Vielzahl von prismatischen Batteriezellen angeordnet ist und eine Oberfläche der ersten prismatischen Batteriezelle (211) vollständig bedeckt, wobei die erste Anpressplatte (221) konfiguriert ist, um eine Ausdehnungskraft in der Dickenrichtung der prismatischen Batteriezellen auf den mindestens einen Drucksensor (222) zu übertragen, und wobei der mindestens eine Drucksensor (222) konfiguriert ist, um die Ausdehnungskraft zu überwachen,
wobei die Vielzahl von prismatischen Batteriezellen eine gleiche Form aufweisen und wobei der Batteriepack (200) ferner umfasst:
ein Batteriepackgehäuse (240), wobei das Batteriepackgehäuse (240) eine Bodenplatte (241), zwei Seitenplatten (242) und eine obere Abdeckplatte (243) umfasst, wobei das Batteriemodul (210) an der Bodenplatte (241) befestigt ist, wobei die beiden Seitenplatten (242) konfiguriert sind, um das Batteriemodul (210) nahtlos anzuordnen, und wobei die obere Abdeckplatte (243) konfiguriert ist, um einen oberen Teil des Batteriemoduls (210) einzupacken;
wobei zwischen den prismatischen Batteriezellen ein Strukturklebstoff verwendet wird.

2. Batteriepack (200) nach Anspruch 1, wobei die erste prismatische Batteriezelle (211) eine erste Batteriezelle an einer Seite der ersten Endplatte (212) der zwei Endplatten ist und wobei der mindestens eine Drucksensor (222) zwischen der ersten Endplatte (212) und der ersten Anpressplatte (221) angeordnet ist.

3. Batteriepack (200) nach Anspruch 1 oder 2, wobei die Druckerfassungsvorrichtung (220) ferner eine zweite Anpressplatte (223) umfasst; und wobei die Druckerfassungsvorrichtung (220) zwischen der ersten Endplatte (212) und der ersten prismatischen Batteriezelle (211) angeordnet ist, wobei die zweite Anpressplatte (223) zwischen der ersten Endplatte (212) und dem mindestens einen Drucksensor (222) angeordnet ist; oder wobei die Druckerfassungsvorrichtung (220) zwischen der ersten prismatischen Batteriezelle (211) und einer zweiten prismatischen Batteriezelle (213) aus der Vielzahl von prismatischen Batteriezellen angeordnet ist, wobei die zweite Anpressplatte zwischen der zweiten prismatischen Batteriezelle (213) und dem mindestens einen Drucksensor (222) angeordnet ist und wobei die erste Anpressplatte (221) zwischen der ersten prismatischen Batteriezelle (211) und dem mindestens einen Drucksensor (222) angeordnet ist.

4. Batteriepack (200) nach Anspruch 3, wobei die zweite Anpressplatte (223) und die erste Anpressplatte (221) eine gleiche Größe aufweisen.

5. Batteriepack (200) nach einem der Ansprüche 1 bis 4, wobei der Batteriepack (200) ferner umfasst:
ein Führungselement (230), das konfiguriert ist zum Führen von mindestens einer Anpressplatte (221, 223), um sie entlang einer Dickenrichtung der prismatischen Batteriezellen zu bewegen.

6. Batteriepack (200) nach Anspruch 5, wobei das Führungselement eine Vielzahl von Gleitwellen umfasst und wobei die Vielzahl von Gleitwellen zwischen der ersten Endplatte (212) und einer zweiten Endplatte (214) der beiden Endplatten fixiert sind und wobei die Vielzahl von Gleitwellen die Anpressplatte durchqueren.

7. Batteriepack (200) nach Anspruch 6, wobei das Führungselement vier Gleitwellen umfasst und wobei die vier Gleitwellen parallel und gleichmäßig in vier Ecken der Anpressplatte verteilt sind.

8. Batteriepack (200) nach einem der Ansprüche 1 bis 7, wobei das Batteriemodul (210) ferner umfasst:
eine Batteriemesseinheit, BMU (215), die konfiguriert ist, um einen Wert der Ausdehnungskraft, die von der Druckerfassungsvorrichtung (220) überwacht wird, an ein externes Batterieverwaltungssystem BMS zu übertragen.

9. Batteriepack (200) nach Anspruch 1, wobei das Batteriemodul (210) ferner eine Leitungsisolationsplatte (216) umfasst und wobei die Leitungsisolationsplatte (216) zwischen dem oberen Teil des Batteriemoduls (210) und der oberen Abdeckplatte (243) angeordnet ist und konfiguriert ist, um die Verbindungsleitungen des Batteriemoduls (210) von dem Batteriemodul (210) zu isolieren.

10. Batteriepack (200) nach einem der Ansprüche 1 bis 9, wobei der Batteriepack (200) eine Vielzahl der Batteriemodule (210) mit einer gleichen Spezifikation umfasst und wobei die Vielzahl der Batteriemodule (210) mit der gleichen Spezifikation in der gleichen Weise fest auf der Bodenplatte (241) platziert sind.

11. Batteriepack (200) nach Anspruch 1 oder 9, wobei die beiden Endplatten, die beiden Seitenplatten (242) und die Bodenplatte (241) in einer vernieteten oder verschweißten Weise verbunden sind.

12. Batteriepack (200) nach einem der Ansprüche 1 bis 11, wobei jeder des mindestens einen Drucksensors (222) einen Dehnungsmessstreifen umfasst oder wobei jeder Drucksensor einen Dehnungsmessstreifen, einen elektronischen Verstärker, einen Analog-Digital-Wandler und einen Mikroprozessor umfasst.

13. Batterieenergiespeichersystem (300), wobei das Batterieenergiespeichersystem (300) den mindestens einen Batteriepack nach einem der Ansprüche 1 bis 12 und ein Batterieverwaltungssystem BMS (310) umfasst; und
wobei eine Druckerfassungsvorrichtung (220) in jedem des mindestens einen Batteriepacks (200) konfiguriert ist, um eine Ausdehnungskraft in einer Dickenrichtung von prismatischen Batteriezellen in einem Batteriepack zu überwachen; und wobei das BMS (310) verwendet wird, um einen Zustand eines entsprechenden Batteriepacks basierend auf einer Änderung der Ausdehnungskraft zu ermitteln, die von der Druckerfassungsvorrichtung in jedem der Batteriepacks überwacht wird.

14. Batterieenergiespeichersystem (300) nach Anspruch 13, wobei das Batterieenergiespeichersystem (300) konfiguriert ist, um in einem Elektrofahrzeug angewandt zu werden, und wobei die Druckerfassungsvorrichtung (220) in einem ersten Batteriepack (200) in dem mindestens einen Batteriepack konfiguriert ist, um in eine Fahrtrichtung des Elektroautos zu weisen.

## Revendications

1. Bloc-batterie (200), le bloc-batterie (200) comprenant un module de batterie (210) et un appareil de détection de pression (220) ;
le module de batterie (210) comprenant une pluralité de cellules de batterie rigides, les cellules de batterie rigides ayant un boîtier en acier ou en aluminium, et deux plaques d'extrémité, la pluralité de cellules de batterie rigides étant disposées en couches empilées, et les deux plaques d'extrémité étant disposées séparément le long de la direction de l'épaisseur des cellules de batterie rigides pour presser fermement la pluralité de cellules de batterie rigides et l'appareil de détection de pression (220) qui est disposé entre les deux plaques d'extrémité ;
l'appareil de détection de pression (220) comprenant une première plaque de pression (221) et au moins un capteur de pression (222) disposé sur la première plaque de pression (221), la première plaque de pression (221) étant disposée sur une première cellule de batterie rigide (211) de la pluralité de cellules de batterie rigides et recouvrant complètement une surface de la première cellule de batterie rigide (211), la première plaque de pression (221) étant configurée pour transférer une force d'expansion dans la direction de l'épaisseur des cellules rigides de batterie vers l'au moins un capteur de pression (222), et l'au moins un capteur de pression (222) étant configuré pour surveiller la force d'expansion,
où la pluralité de cellules de batterie rigides ont la même forme, et le bloc-batterie (200) comprend en outre :
un boîtier de bloc-batterie (240), le boîtier de bloc-batterie (240) comprenant une plaque inférieure (241), deux plaques latérales (242) et une plaque de couverture supérieure (243), le module de batterie (210) étant fixé à la plaque inférieure (241), les deux plaques latérales (242) étant configurées pour agencer soigneusement le module de batterie (210), et la plaque de couverture supérieure (243) étant configurée pour emballer une partie supérieure du module de batterie (210) ;
où un adhésif structurel est utilisé entre les cellules de batterie rigides.

2. Bloc-batterie (200) selon la revendication 1, dans lequel la première cellule de batterie rigide (211) est une première cellule de batterie sur un côté de première plaque d'extrémité (212) des deux plaques d'extrémité, et l'au moins un capteur de pression (222) est disposé entre la première plaque d'extrémité (212) et la première plaque de pression (221).

3. Bloc-batterie (200) selon la revendication 1 ou la revendication 2, dans lequel l'appareil de détection de pression (220) comprend en outre une deuxième plaque de pression (223) ; et l'appareil de détection de pression (220) est agencé entre la première plaque d'extrémité (212) et la première cellule de batterie rigide (211), la deuxième plaque de pression (223) est située entre la première plaque d'extrémité (212) et l'au moins un capteur de pression (222) ; ou l'appareil de détection de pression (220) est disposé entre la première cellule de batterie rigide (211) et une deuxième cellule de batterie rigide (213) dans la pluralité de cellules de batterie rigides, la deuxième plaque de pression est située entre la deuxième cellule de batterie rigide (213) et l'au moins un capteur de pression (222), et la première plaque de pression (221) est située entre la première cellule de batterie rigide (211) et l'au moins un capteur de pression (222).

4. Bloc-batterie (200) selon la revendication 3, dans lequel la deuxième plaque de pression (223) et la première plaque de pression (221) sont de dimensions égales.

5. Bloc-batterie (200) selon l'une quelconque des revendications 1 à 4, le bloc-batterie (200) comprenant en outre :
un élément de guidage (230), configuré pour guider au moins une plaque de pression (221, 223) pour se déplacer le long d'une direction d'épaisseur des cellules de batterie rigides.

6. Bloc-batterie (200) selon la revendication 5, dans lequel l'élément de guidage comprend une pluralité d'arbres coulissants, et la pluralité d'arbres coulissants sont fixés entre la première plaque d'extrémité (212) et une deuxième plaque d'extrémité (214) des deux plaques d'extrémité, et la pluralité d'arbres coulissants passent à travers la plaque de pression.

7. Bloc-batterie (200) selon la revendication 6, dans lequel l'élément de guidage comprend quatre arbres coulissants, et les quatre arbres coulissants sont parallèles et répartis uniformément dans quatre coins de la plaque de pression.

8. Bloc-batterie (200) selon l'une quelconque des revendications 1 à 7, dans lequel le module de batterie (210) comprend en outre :
une unité de mesure de batterie, BMU (215), configurée pour transmettre une valeur de la force d'expansion surveillée par l'appareil de détection de pression (220) à un système de gestion de batterie externe BMS.

9. Bloc-batterie (200) selon la revendication 1, dans lequel le module de batterie (210) comprend en outre une carte d'isolation de ligne (216), et la carte d'isolation de ligne (216) est disposée entre la partie supérieure du module de batterie (210) et la plaque de couverture supérieure (243), et est configurée pour isoler les lignes de connexion du module de batterie (210) du module de batterie (210).

10. Bloc-batterie (200) selon l'une quelconque des revendications 1 à 9, le bloc-batterie (200) comprenant une pluralité de modules de batterie (210) ayant la même spécification, et la pluralité de modules de batterie (210) ayant la même spécification sont placés de manière fixe sur la plaque de fond (241) de la même manière.

11. Bloc-batterie (200) selon la revendication 1 ou 9, dans lequel les deux plaques d'extrémité, les deux plaques latérales (242) et la plaque de fond (241) sont connectées par rivetage ou soudage.

12. Bloc-batterie (200) selon l'une quelconque des revendications 1 à 11, dans lequel chacun de l'au moins un capteur de pression (222) comprend un capteur de contrainte de résistance, ou chaque capteur de pression comprend un capteur de contrainte de résistance, un amplificateur électronique, un convertisseur analogique-numérique et un microprocesseur.

13. Système de stockage d'énergie par batterie (300), le système de stockage d'énergie par batterie (300) comprenant l'au moins un bloc-batterie selon l'une quelconque des revendications 1 à 12 et un système de gestion de batterie BMS (310) ; et
un appareil de détection de pression (220) dans chacun de l'au moins un bloc-batterie (200) est configuré pour surveiller une force d'expansion dans la direction de l'épaisseur des cellules de batterie rigides dans un bloc-batterie ; et le BMS (310) est utilisé pour déterminer l'état d'un bloc-batterie correspondant sur la base d'un changement de la force d'expansion surveillée par l'appareil de détection de pression dans chacun des blocs-batteries.

14. Système de stockage d'énergie par batterie (300) selon la revendication 13, le système de stockage d'énergie par batterie (300) étant configuré pour être appliqué à une voiture électrique, et l'appareil de détection de pression (220) dans un premier bloc-batterie (200) dans l'au moins un bloc-batterie étant configuré pour être orienté vers la direction de conduite de la voiture électrique.
